# EUROPÄISCHE PATENTANMELDUNG

(11) **EP 1 460 499 A1**
(43) Veröffentlichungstag der Anmeldung: **22.09.2004**
(21) Anmeldenummer: 03005919.0
(22) Anmeldetag: 17.03.2003
(51) Int. Cl.: G05B 19/409, G05B 19/10

(54) **Bedienungsoberfläche einer Werkzeugmaschine**

(71) Anmelder: TRUMPF Werkzeugmaschinen GmbH + Co. KG, 71254 Ditzingen (DE)
(72) Erfinder: Lausterer, Stephan, 72793 Pfullingen (DE); Bauer, Klaus, 71254 Ditzingen (DE)
(74) Vertreter: KOHLER SCHMID + PARTNER

(57) **Zusammenfassung**

Eine Bedienungsoberfläche einer Werkzeugmaschine umfasst eine in mindestens zwei Bereiche (2, 4) unterteilte Anzeige (1), ein im ersten Anzeigebereich (2) dauerhaft angezeigtes Hauptmenü (3), insbesondere Menüleiste, zur Auswahl verschiedener Hauptmodi (3₁-3₇) der Bedienungsoberfläche und jeweils ein im zweiten Anzeigebereich (4) entsprechend dem im Hauptmenü (3) ausgewählten Hauptmodus geöffnetes Hauptfenster (5₁-5₇), wobei mindestens eines der Hauptfenster (5₁-5₇) ein darin dauerhaft angezeigtes Submenü zur Auswahl von verschiedenen Submodi und ein entsprechend dem ausgewählten Submodus geöffnetes Subfenster aufweist, sowie eine Eingabeeinheit zum Auswählen der einzelnen Modi (3₁-3₇) und zum Bearbeiten der in einem Fenster (5₁-5₇) vorgesehenen Eingabefelder, wobei auf der Anzeige (1) dauerhaft angezeigt ist, welcher Hauptmodus ausgewählt ist.

## Beschreibung

Die vorliegende Erfindung betrifft eine Bedienungsoberfläche einer Werkzeugmaschine.

Aufgabe der vorliegenden Erfindung ist es, die Übersichtlichkeit einer solchen Bedienungsoberfläche zu verbessern.

Diese Aufgabe wird erfindungsgemäß gelöst durch eine Bedienungsoberfläche mit einer in mindestens zwei Bereiche unterteilten Anzeige, mit einem im ersten Anzeigebereich dauerhaft angezeigten Hauptmenü, insbesondere Menüleiste, zur Auswahl verschiedener Hauptmodi der Bedienungsoberfläche und mit jeweils einem im zweiten Anzeigebereich entsprechend dem im Hauptmenü ausgewählten Hauptmodus geöffneten Hauptfenster, wobei mindestens eines der Hauptfenster ein darin dauerhaft angezeigtes Submenü zur Auswahl von verschiedenen Submodi und ein entsprechend dem im ausgewählten Submodus geöffnetes Subfenster aufweist, und mit einer Eingabeeinheit zum Auswählen der einzelnen Modi und zum Bearbeiten der in einem Fenster vorgesehenen Eingabefelder, wobei auf der Anzeige dauerhaft angezeigt ist, welcher Hauptmodus ausgewählt ist.

Die erfindungsgemäße Bedienungsoberfläche ist tätigkeitsorientiert gestaltet, d.h. Informationen und Funktionen sind so auf der Bedienungsoberfläche dargestellt, dass die Tätigkeit des Benutzers darauf abgebildet wird. Es werden die Informationen bzw. Funktionen dargestellt, die für die Erledigung der aktuellen Aufgabe notwendig sind. Die Darstellung dieser Informationen orientieren sich am gewohnten Arbeitsablauf. Der Benutzer erhält Zugänge zur wesentlichen Funktionalität der Maschine über so genannte Hauptmodi (Haupttätigkeiten), die stets auf der Anzeige sichtbar sind. Die Submodi (Nebentätigkeiten) orientieren sich am Workflow (Arbeitsablauf) des jeweiligen Hauptmodus.

Hauptmodi sind z.B. Produzieren, Einrichten, Programmieren, Technologie, Wartung & Inbetriebnahme, Diagnose und Hilfe. Im Fall einer Rohrbiegemaschine sind die Submodi des Hauptmodus "Einrichten" z.B. Funktionsbausteine, Einzelfunktionen und Rüsten, die Submodi des Hauptmodus "Programmieren" Biegeteil, Rohrgeometrie, Rohrdaten, Werkzeuge, Prozessablauf und Korrekturen, die Submodi des Hauptmodus "Technologie" z.B. Rohrdaten, Werkzeugkatalog und Nachdrücken, die Submodi des Hauptmodus "Wartung & Inbetriebnahme" z.B. Wartungsübersicht, Wartungsplan, Maschinenparameter und Maschinenoptionen, die Submodi des Hauptmodus "Diagnose" z.B. anstehende Meldungen, Meldungshistorie, E/A-Monitor und Softwareversionen und die Submodi des Hauptmodus "Hilfe" z.B. Maschinenansicht, Biegetechnologie, Betriebanleitung und Ersatzteilliste.

Der wesentliche Vorteil der erfindungsgemäßen Bedienungsoberfläche besteht darin, dass der Benutzer anhand des dauerhaft angezeigten Hauptmenüs, in dem der ausgewählte Hauptmodus hervorgehoben ist, und des dauerhaft angezeigten Submenüs stets erkennen kann, in welchem Haupt- und Submodus er sich gerade befindet. Außerdem hat der Benutzer aus jedem Fenster eines Hauptmodus die Möglichkeit, in ein anderes Hauptfenster durch Auswahl eines Hauptmodus im dauerhaft angezeigten Hauptmenü zu wechseln.

Im Hauptmenü kann der ausgewählte Hauptmodus markiert, z.B. graphisch oder sonst wie hervorgehoben sein.

Sofern erforderlich, kann ein Subfenster ein darin dauerhaft angezeigtes Subsubmenü zur Auswahl von verschiedenen Subsubmodi des ausgewählten Submodus und ein entsprechend dem ausgewählten Subsubmodus geöffnetes Subsubfenster aufweisen.

Bei vorteilhaften Ausführungsformen der Erfindung weist mindestens eines der Fenster ein Navigationsmenü zur Auswahl verschiedener Navigationsmodi auf, die jeweils einen Bereich der Werkzeugmaschine graphisch darstellen, wobei entsprechend dem ausgewählten Navigationsmodus ein Navigationsfenster innerhalb des zugehörigen Fensters geöffnet ist. Das Navigationsmenü als darstellungsbezogener Zugang basiert auf der wirklichkeitsnahen Darstellung der physikalischen Maschine bzw. von Maschinenteilbereichen und dient z.B. zur Auswahl von Maschinenbereichen, auf die bestimmte Aktionen oder Einstellungen angewandt werden sollen. Die wirklichkeitsnahe Darstellung ermöglicht einen direkten Transfer zwischen der tatsächlichen Maschine und der Software, so dass hier mit geringem Lernaufwand effizient gearbeitet werden kann. Auch Sonderoptionen, die aufgrund kundenspezifischer Anpassungen der Maschine enthalten sein können, werden mit Hilfe des darstellungsbezogenen Zugangs über Listen auswählbar.

Vorzugsweise ist das Subfenster, Subsubfenster oder Navigationsfenster, das vor einem Wechsel in einen anderen Hauptmodus geöffnet war, bei Rückkehr in den ursprünglichen Hauptmodus geöffnet. Wechselt der Benutzer den Hauptmodus, während z.B. ein Subfenster geöffnet ist, findet er dieses immer noch geöffnet vor, wenn er wieder zum ursprünglichen Hauptmodus zurückwechselt. Dadurch wird erreicht, dass der Benutzer auch bei geöffneten Subfenster zu anderen Hauptmodi wechseln kann. So kann der Benutzer beispielsweise von jeder Stelle in den Hauptmodus "Diagnose", um eventuell aufgelaufene Alarme oder Warnungen zu analysieren, oder in den Hauptmodus "Hilfe" wechseln, ohne dass er die betreffenden Fenster schließen muss. Über diesen Weg kann der Benutzer auch parallel zum automatischen Produzieren ein neues Teil programmieren. Dabei kann er zwischen den Hauptmodi "Produzieren" und "Programmieren" wechseln, ohne dass diese sich beeinflussen.

Bei bevorzugten Ausführungsformen der Erfindung weist mindestens eines der Fenster mindestens einen Aktionsbutton zur Bearbeitung von darin vorgesehenen Eingabefeldern auf, dem ein Aktionsbuttonfenster zugeordnet ist. Die Aktionsbuttonfenster haben den Vorteil, dass die durch Aufruf des Aktionsbuttons eingeleitete Aktion vom Bediener entweder bewusst abgebrochen oder zu Ende geführt werden muss. Nach Schließen des Aktionsbuttonfensters erfolgt eine Rückkehr in das Fenster, von dem aus das Aktionsbuttonfenster geöffnet wurde. Über die Aktionsbuttons können Funktionen direkt ausgeführt bzw. ein entsprechender Subdialog gestartet werden.

Von Vorteil ist es, wenn bei geöffnetem Aktionsbuttonfenster ein Wechsel in ein anderes Fenster des gleichen Hauptmodus blockiert ist. Bei geöffnetem Aktionsbuttonfenster sind dann keine anderen Fenster des dem Aktionsbuttonfenster zugeordneten Hauptmodus bearbeitbar.

Bevorzugt ist innerhalb eines Hauptmodus die Reihenfolge der einzelnen Submodi, Subsubmodi und der Navigationsmodi am Workflow der Werkzeugmaschine orientiert. Sofern ein Submenü horizontal als Kartenreiter angeordnet ist, ist der Zugang zu dem zuerst zu erledigenden Submodus auf dem Kartenreiter ganz links dargestellt. Je weiter der Benutzer im Workflow fortschreitet, desto weiter rechts sind die entsprechenden Kartenreiter zu finden.

Vorzugsweise sind zumindest die Submenüs und/oder die Subsubmenüs als Kartenreitermenüleiste ausgebildet.

Bei bevorzugten Ausführungsformen der Erfindung sind die Anzeige und die Eingabeeinheit durch einen Touchscreen gebildet, so dass die Navigation durch die Bedienungsoberflächen mittels Touchscreenbedienung erfolgt. Um eine Ausfallsicherheit zu gewährleisten, ist es optional möglich, mit Keyboard und Maus zu navigieren.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

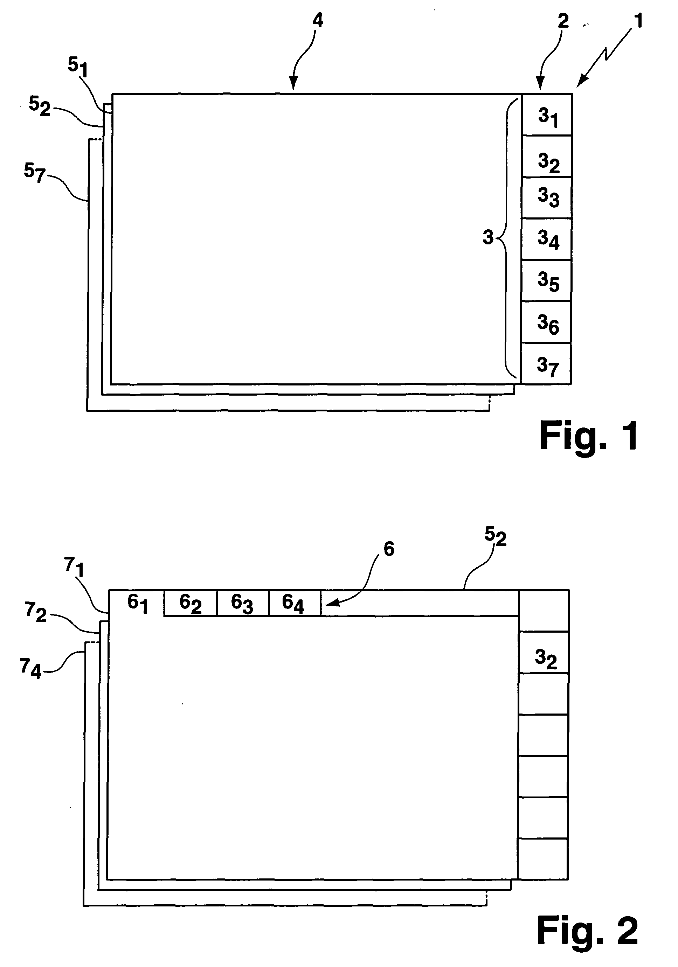

- Fig. 1 bis Fig. 6: verschiedene Anzeigen der erfindungsgemäßen Bedienungsoberfläche.

In **Fig. 1** ist die Anzeige **1** einer Bedienungsoberfläche einer Werkzeugmaschine gezeigt. Die Anzeige 1 ist unterteilt in einen rechten Anzeigebereich **2**, in welchem ein Hauptmenü **3** zur Auswahl von beispielhaft sieben verschiedenen Hauptmodi **3**_{**1**} bis **3**_{**7**} der Bedienungsoberfläche angezeigt ist, und in einen linken Anzeigebereich **4**, in welchem abhängig von dem im Hauptmenü 3 ausgewählten Hauptmodus jeweils ein anderes Hauptfenster **5**_{**1**} bis **5**_{**7**} geöffnet wird. Das als vertikale Menüleiste ausgebildete Hauptmenü 3 ist dauerhaft angezeigt und umfasst als auswählbare Hauptmodi 3₁ bis 3₇ verschiedene Haupttätigkeiten der Werkzeugmaschine, insbesondere Produzieren, Einrichten, Programmieren, Wartung/Inbetriebnahme/Diagnose, Hilfe etc..

In Fig. 1 ist das dem Hauptmodus 3₁ zugeordnete Hauptfenster 5₁ geöffnet, welches ein reines Anzeigenfenster ist und daher kein vom Bediener auswählbares Submenü oder ausfüllbare Datenfelder aufweist.

In **Fig. 2** ist das dem Hauptmodus 3₂ zugeordnete Hauptfenster 5₂ geöffnet. In diesem Fenster werden oben dauerhaft ein Submenü **6** in Form einer horizontalen Kartenreitermenüleiste zur Auswahl von beispielhaft vier verschiedenen Submodi **6**_{**1**} bis **6**_{**4**} des ausgewählten Hauptmodus 3₂ und darunter jeweils ein abhängig vom ausgewählten Submodus geöffnetes Subfenster **7**_{**1**} bis **7**_{**4**} angezeigt. Im gezeigten Beispiel ist der Submodus 6₁ ausgewählt und daher das zugeordnete Subfenster 7₁ geöffnet. Wechselt der Benutzer den Hauptmodus, während das Subfenster 7₁ geöffnet ist, findet er dieses immer noch geöffnet vor, wenn er wieder zum ursprünglichen Hauptmodus 3₂ zurückwechselt.

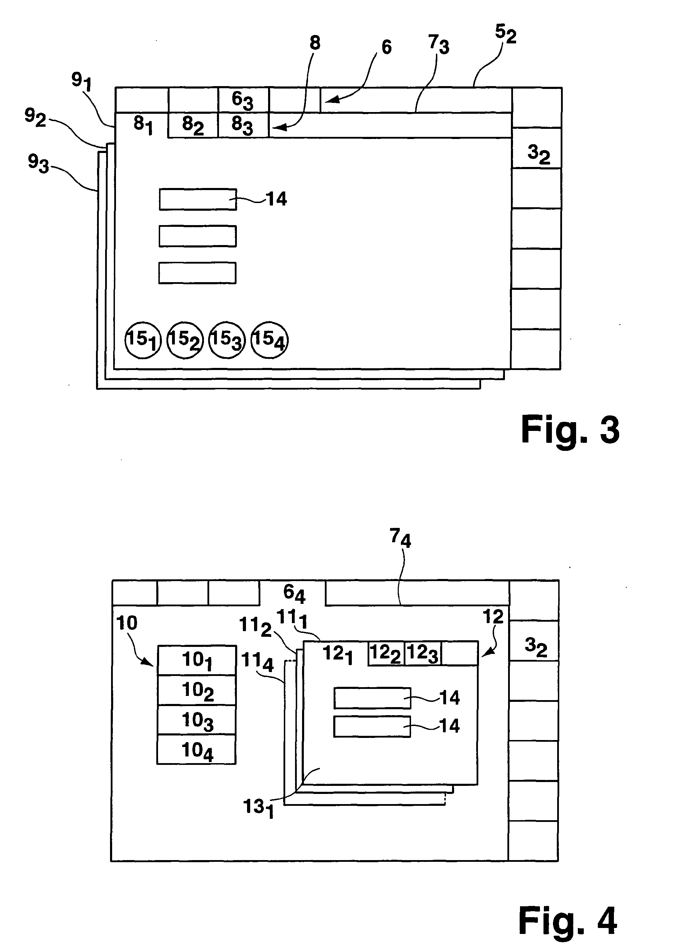

In **Fig. 3** sind das dem Hauptmodus 3₂ zugeordnete Hauptfenster 5₂ und darin das dem Submodus 6₃ zugeordnete Subfenster 7₃ geöffnet. Im Subfenster 7₃ werden oben dauerhaft ein Subsubmenü **8** in Form einer horizontalen Kartenreitermenüleiste zur Auswahl von beispielhaft drei verschiedenen Subsubmodi **8**_{**1**} bis **8**_{**3**} des ausgewählten Submodus 6₃ und darunter jeweils ein abhängig vom ausgewählten Subsubmodus geöffnetes Subsubfenster **9**_{**1**} bis **9**_{**3**} angezeigt. Im gezeigten Beispiel ist der Subsubmodus 8₁ ausgewählt und daher das zugeordnete Subsubfenster 9₁ geöffnet.

In **Fig. 4** sind das dem Hauptmodus 3₂ zugeordnete Hauptfenster 5₂ und darin das dem Submodus 6₄ zugeordnete Subfenster 7₄ geöffnet. Im Subfenster 7₄ werden links dauerhaft ein Navigationsmenü **10** in Form einer vertikalen Menüleiste zur Auswahl von beispielhaft vier verschiedenen Navigationsmodi **10**_{**1**} bis **10**_{**4**} des ausgewählten Submodus 6₄ und rechts daneben jeweils ein abhängig vom ausgewählten Navigationsmodus geöffnetes Navigationsfenster **11**_{**1**} bis **11**_{**4**} angezeigt. Im gezeigten Beispiel ist der Navigationsmodus 10₁ ausgewählt und daher das zugeordnete Navigationsfenster 11₁ geöffnet, das oben ein Navigationssubmenü **12** in Form einer horizontalen Kartenreitermenüleiste zur Auswahl von beispielhaft vier verschiedenen Navigationssubmodi **12**_{**1**} bis **12**_{**3**} und darunter jeweils ein abhängig vom ausgewählten Navigationssubmodus geöffnetes Navigationssubfenster aufweist. Im gezeigten Beispiel ist der Navigationssubmodus 12₁ ausgewählt und entsprechend das Navigationssubfenster **13**_{**1**} geöffnet. Die einzelnen Navigationsmodi 10₁ bis 10₄ stellen jeweils einen Bereich der Werkzeugmaschine graphisch dar.

Die Hauptfenster 5₁ bis 5₇, die Subfenster 7₁ bis 7₄, die Subsubfenster 9₁ bis 9₃, die Navigationsfenster 11₁ bis 11₄ und die Navigationssubfenster weisen, sofern es sich nicht um reine Anzeigefenster handelt, Eingabefelder **14** auf, die vom Bediener ausgefüllt werden können. Wie in Fig. 3 gezeigt, sind am unteren Rand des Subsubfensters 9₁ Aktionsbuttons **15**_{**1**} bis **15**_{**4**} vorgesehen, die die Bearbeitung der im Subsubfenster 9₁ vorgesehenen Eingabefelder 14 unterstützen. Die Aktionsbuttons können z.B. "Erstellen neuer Daten", "Bearbeiten vorhandener Daten", "Löschen vorhandener Daten", "Importieren von Daten" sein.

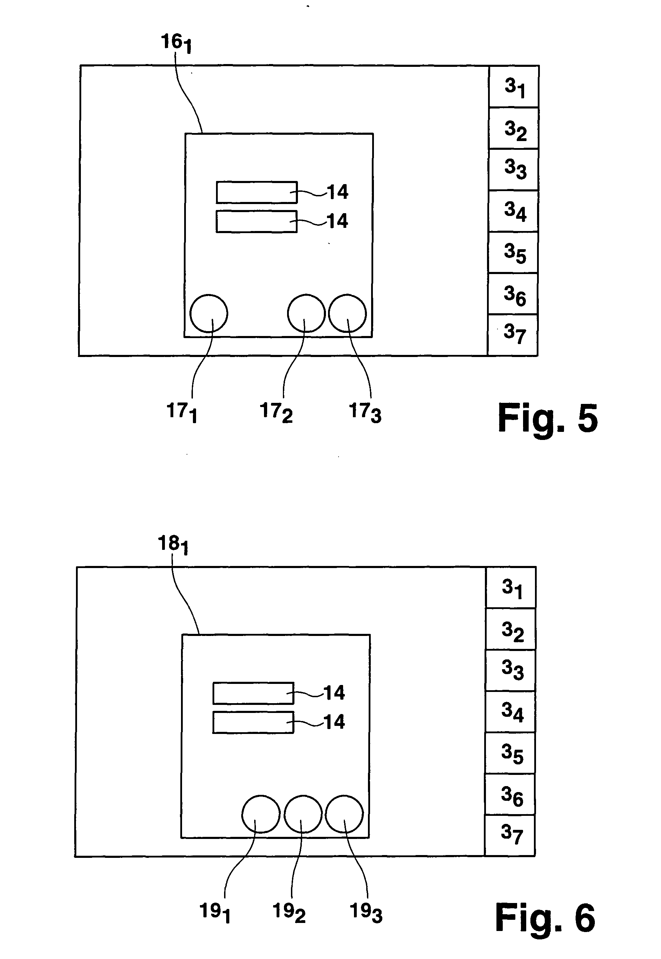

Jedem Aktionsbutton ist ein Aktionsbuttonfenster zugeordnet. Das in Fig. 5 beispielhaft gezeigte Aktionsbuttonfenster **16**_{**1**} des Aktionsbuttons 15₁ weist neben Eingabefeldern 14 weitere Aktionsbuttons **17**_{**1**} bis **17**_{**3**} mit den Funktionen "Assistent", "Übernehmen der eingegebenen Daten" und "Abbrechen" auf.

Bei Aufruf des Assistenten, d.h. des Aktionsbuttons 17₁, öffnet sich das in **Fig. 6** gezeigte Assistentenfenster **18**_{**1**}**,** das neben Eingabefeldern 14 weitere Aktionsbuttons **19**_{**1**} bis **19**_{**3**} mit den Funktionen "Assistent vor", "Assistent zurück" und "Abbrechen" aufweist. Mit der Funktion "Assistent vor" kann ein weiteres Assistentenfenster und mit der Funktion "Assistent zurück" das jeweils vorhergehende Assistentenfenster aufgerufen werden. Der Assistent ermöglicht somit das Navigieren des Bedieners beim Eingeben der erforderlichen Daten.

Bei geöffnetem Aktionsbuttonfenster 16₁, 18₁ ist ein Wechsel in ein anderes Fenster des gleichen Hauptmodus blockiert, und daher sind keine anderen Fenster des dem Aktionsbuttonfenster zugeordneten Hauptmodus bearbeitbar. Nach Schließen des Aktionsbuttonfensters erfolgt eine Rückkehr in das Fenster, von dem aus das Aktionsbuttonfenster geöffnet wurde. Die Aktionsbuttonfenster 16₁, 18₁ haben den Vorteil, dass die durch Aufruf eines Aktionsbuttons eingeleitete Aktion vom Bediener entweder bewusst abgebrochen oder zu Ende geführt werden muss.

Zusätzlich zu den beiden in der Zeichnung dargestellten Anzeigebereichen 2, 4 können noch weitere Anzeigenbereiche vorgesehen sein, z.B. ein Informationsfenster, in dem z.B. Benutzername, Warnungen etc. angezeigt werden.

## Patentansprüche

1. Bedienungsoberfläche einer Werkzeugmaschine, mit einer in mindestens zwei Bereiche (2, 4) unterteilten Anzeige (1), mit einem im ersten Anzeigebereich (2) dauerhaft angezeigten Hauptmenü (3), insbesondere Menüleiste, zur Auswahl verschiedener Hauptmodi (3₁-3₇) der Bedienungsoberfläche und mit jeweils einem im zweiten Anzeigebereich (4) entsprechend dem im Hauptmenü (3) ausgewählten Hauptmodus geöffneten Hauptfenster (5₁-5₇), wobei mindestens eines der Hauptfenster (5₁-5₇) ein darin dauerhaft angezeigtes Submenü (6) zur Auswahl von verschiedenen Submodi (6₁-6₄) und ein entsprechend dem ausgewählten Submodus geöffnetes Subfenster (7₁-7₄) aufweist, und mit einer Eingabeeinheit zum Auswählen der einzelnen Modi (3₁-3₇; 6₁-6₇) und zum Bearbeiten der in einem Fenster (5₁-5₇; 7₁-7₄) vorgesehenen Eingabefelder (14), wobei auf der Anzeige (1) dauerhaft angezeigt ist, welcher Hauptmodus ausgewählt ist.

2. Bedienungsoberfläche nach Anspruch 1, **dadurch gekennzeichnet, dass** im Hauptmenü (3) der ausgewählte Hauptmodus markiert ist.

3. Bedienungsoberfläche nach Anspruch 1 oder 2, **dadurch gekennzeichnet, dass** mindestens eines der Subfenster (7₁-7₄) ein darin dauerhaft angezeigtes Subsubmenü (8) zur Auswahl von verschiedenen Subsubmodi (8₁-8₃) des ausgewählten Submodus und ein entsprechend dem ausgewählten Subsubmodus geöffnetes Subsubfenster (9₁-9₃) aufweist.

4. Bedienungsoberfläche nach einem der vorhergehenden Ansprüche, **dadurch gekennzeichnet, dass** mindestens eines der Fenster (5₁-5₇; 7₁-7₄, 9₁-9₃) ein Navigationsmenü (10) zur Auswahl verschiedener Navigationsmodi (10₁-10₄) aufweist, die jeweils einen Bereich der zu Werkzeugmaschine graphisch darstellen, und dass entsprechend dem ausgewählten Navigationsmodus ein Navigationsfenster (11₁-11₄) innerhalb des zugehörigen Fensters (5₁-5₇; 7₁-7₄; 9₁-9₃) geöffnet ist.

5. Bedienungsoberfläche nach einem der vorhergehenden Ansprüche, **dadurch gekennzeichnet, dass** das Subfenster, Subsubfenster oder Navigationsfenster, das vor einem Wechsel in einen anderen Hauptmodus geöffnet war, bei Rückkehr in den ursprünglichen Hauptmodus geöffnet ist.

6. Bedienungsoberfläche nach einem der vorhergehenden Ansprüche, **dadurch gekennzeichnet, dass** mindestens eines der Fenster (5₁-5₇; 7₁-7₄; 9₁-9₃) mindestens einen Aktionsbutton (15₁-15₄; 17₁-17₃) zur Bearbeitung von darin vorgesehenen Eingabefeldern (14) aufweist, dem ein Aktionsbuttonfenster (16₁; 18₁) zugeordnet ist.

7. Bedienungsoberfläche nach Anspruch 6, **dadurch gekennzeichnet, dass** bei geöffnetem Aktionsbuttonfenster (16₁; 18₁) ein Wechsel in ein anderes Fenster (5₁-5₇; 7₁-7₄; 9₁-9₃) des gleichen Hauptmodus blockiert ist.

8. Bedienungsoberfläche nach einem der vorhergehenden Ansprüche, **dadurch gekennzeichnet, dass** innerhalb eines Hauptmodus die Reihenfolge der einzelnen Submodi (6₁-6₄), Subsubmodi (8₁-8₃) und Navigationsmodi (10₁-10₄) am Workflow der Werkzeugmaschine orientiert ist.

9. Bedienungsoberfläche nach einem der vorhergehenden Ansprüche, **dadurch gekennzeichnet, dass** zumindest die Submenüs (6) und/oder die Subsubmenüs (8) als Kartenreitermenüleiste ausgebildet sind.

10. Bedienungsoberfläche nach einem der vorhergehenden Ansprüche, **dadurch gekennzeichnet, dass** die Anzeige (1) und die Eingabeeinheit durch einen Touchscreen gebildet sind.
